# EUROPEAN PATENT SPECIFICATION

(11) **EP 1 298 376 B1**
(45) Date of publication and mention of the grant of the patent: **20.12.2006**
(21) Application number: 02021464.9
(22) Date of filing: 25.09.2002
(51) Int. Cl.: F16L 33/24, F16L 33/22, F16L 25/00, F16L 33/207

(54) **Structure and method for connecting end fitting to composite hose**
Anordnung und Verfahren zum Verbinden eines Anschlussstückes mit einem Verbundschlauch
Dispositif et procédé pour connecter une pièce de raccordement avec un tuyau composite

(30) Priority: 26.09.2001 JP 2001295099
(43) Date of publication of application: 02.04.2003
(73) Proprietor: TOKAI RUBBER INDUSTRIES, LTD., Komaki-shi, Aichi-ken, 485-8550 (JP)
(72) Inventor: Motoshige, Hibino c/o Tokai Rubber Ind., Ltd., Aichi-ken, 485-8550 (JP); Masashi, Sakakibara, (JP)
(74) Representative: Vossius & Partner

(56) References cited:
- EP-A- 0 474 114
- BE-A- 565 460
- DE-U- 8 805 971

## Description

The present invention relates to structure and method for connecting an end metallic fitting to a composite hose having high impermeability comprising a metallic corrugated tube covered by a rubber or resin layer.

A hose such as a fuel hose for a fuel supply system provided in an automobile or a refrigerant hose for an air conditioner equipped in an automobile has been made of rubber a little while ago in many cases. However, a rubber hose generally is not sufficient in impermeability of fuel or refrigerant. Therefore, as regulations against permeability of fuel and the like have become tighter, a hose having higher impermeability has been increasingly requested.

As for a hose having high impermeability, such composite hose is used as comprised a metallic tube having high fluid or gas impermeability as an inner layer, and a rubber or resin outer layer which covers the inner layer in order to protect the metallic tube and to ensure vibration absorption of the hose. In such metallic composite hose, a metallic tube is often constructed so as to have a wall comprising a spiral corrugation formed therein along the entire length thereof as corrugated tube or spirally corrugated tube. Such configuration provides a thin-wall metallic tube with sufficient resistance to crushing by external force as well as overall sufficient flexibility.

Meanwhile, a fuel hose for automobile is usually connected to an automobile engine by means of an end metallic fitting (a metallic coupling) which is tightly connected to an end portion of the fuel hose.

One of structures for connecting an end fitting to a composite hose including a metallic corrugated tube is disclosed in JP, U, 52-99523 where an inwardly directed annular flange of a split ring is engaged with an annular or spiral groove in an outer periphery of an end portion of a corrugated tube over a surrounding layer or a braid thereof, a cylindrical portion of the split ring is fastened with a collar fitted on the outer periphery of the surrounding layer or the braid, and thereby a fixedly mounting portion is constructed. An annular shoulder is provided on an outer periphery of the collar, a cap nut is fitted onto an outer periphery of the collar to be engaged with the shoulder. Displacement in a direction axially outwardly of the cap nut is prevented by engagement of the cap nut with the shoulder. An end fitting is screwed in a tip end portion (axially outer end portion) of the cap nut so as to abut an end edge portion of the corrugated tube. The end fitting is securely connected to a composite hose by means of the fixedly mounting portion and the cap nut, so as to abut tightly the end edge portion of the corrugated tube. That is, the fixedly mounting portion and the cap nut provides fixed connection of the end fitting to the composite hose, and the end fitting and the end edge portion of the corrugated tube in abutment relation provides tight connection of the end fitting to the composite hose.

In such structure for connection of the end fitting to a composite hose, sealing property between the end fitting and the composite hose is ensured under considerable abutment force of the end fitting to an end edge portion of the corrugated tube. And, abutment force of the end fitting to the end edge portion of the corrugated tube is maintained by a fixedly mounting portion fixedly engaged with or connected to the composite hose or spirally corrugated tube enclosing hose. A fixedly mounting portion is securely connected to a composite hose with an inwardly directed annular flange of the split ring engaging in the spiral groove of the corrugated tube. However, a corrugated tube is deformative due to thin-wall configuration. Therefore, when extremely high pressure fluid flows in a corrugated tube, and considerable separation force or pull-off force is exerted under pressure of fluid flow between an end fitting and a composite hose, the braid may come out of a split ring having an inwardly directed flange. Thus, such structure for connection of an end fitting to a composite hose cannot withstand extremely high pressure of fluid in a corrugated tube.
EP-A-0, 474, 114 relates to a method for fastening a connection fitting at the end of a helically corrugated metal pipe, in which a sleeve is screwed onto the end of the corrugated pipe, a number of the corrugations are subsequently compressed from the corrugated pipe end and the sleeve is connected to a bush which penetrates into the corrugated pipe end with a projection, a sealing element is fitted into at least two corrugations and the sealing element is deformed during compression of the corrugation and pressed against the inner wall of the sleeve and the projection of the bush penetrating into the corrugated pipe end.
BE-A-565 460 relates to a connection for flexible pipes, in particular for high-pressure tubes provided with a reinforcement lining. This connection is characterized in that the tube bushing exhibits a passage with shoulders of at least two different diameters and in that the tube end held in said bushing likewise exhibits shoulders reducing it to an appropriate diameter, wherein one part of the passage of the bushing holds the reinforcement lining while the other part comes into contact with the peripheral surface of the tube, said contacting parts being realized in different forms relative to one another.

Thus, it is an object of the present invention to always ensure sufficient sealing property between an end fitting and a composite hose.

In order to achieve the aforementioned object, there is provided a novel structure for connecting an end fitting or a metallic end fitting to a composite hose having a metallic corrugated tube or a metallic spirally corrugated tube covered by a rubber or resin layer or a surrounding layer, that is, a spirally corrugated tube enclosing hose.

The structure of the present invention comprises a metallic sleeve connected to an end portion of the composite hose or the spirally corrugated tube enclosing hose, and an end fitting attached to the sleeve. The corrugated tube or the spirally corrugated tube is exposed out of the surrounding layer at an end portion of the composite hose, while the sleeve has, as a unit or integrally, a connecting portion on one end side (axially outward side) in which the end fitting is fixedly screwed, a thread portion in the middle which is screwed on an outer periphery of the corrugated tube exposed out of the surrounding layer, and a securing portion on the other end side (axially inward side) which covers an end portion (end section) of the surrounding layer and is fixedly clamped onto the end portion of the surrounding layer by compression. The end fitting is screwed in the connecting portion of the sleeve so as to abut an end edge portion of the corrugated tube exposed out of the surrounding layer.

In the present invention, increased connection strength between the sleeve and the composite hose is ensured by screw-thread engagement of the thread portion of the sleeve with a portion of the corrugated tube exposed and clamping engagement between the securing portion on the other end side of the sleeve and the surrounding layer. Therefore, even when high pressure fluid or extremely high pressure fluid flows inside a composite hose, a sleeve never displaces axially (axially outwardly), and strong abut engagement is always kept between the end fitting connected to the sleeve and the end edge portion of the corrugated tube.

In order to ensure sufficient securing engagement by compressively clamping at the securing portion of the sleeve, it is preferred that the surrounding layer is formed so as to fill in an outer peripheral groove of the corrugated tube, and so as to have the cylindrical outer periphery surface without hills and valleys configuration. In thus configured surrounding layer, the securing portion of the sleeve compressively clamped is strongly engaged with the surrounding layer along the entire length thereof.

In structure for connecting an end fitting to a composite hose of the present invention, only a metallic sleeve in unit or integral configuration is used as connecting member. That is, only a small number of connecting parts are required, and connecting procedures can be simplified. And, the sleeve is connected to the composite hose just through procedures of screw-threading and clamping under compression. This further eases working steps for connecting.

On the other hand, in order to achieve sufficient engagement strength by clamping or depressing a securing portion of a sleeve, it is necessary to minimize deformation of a corrugated tube as much as possible when the securing portion is clamped. However, the corrugated tube is usually formed into thin-wall configuration, and is in danger of being deformed under compression by the securing portion clamped on a surrounding layer. Thus, preferably, the end fitting is provided integrally with an insert pipe portion to be inserted into the corrugated tube and extending at least beyond one axial end or an axial outer end of the securing portion of the sleeve to be clamped, or at least within the portion of the surrounding layer on which the securing portion of the sleeve to be clamped. And, an outer diameter of the insert pipe portion is formed substantially identical to an inner diameter of the corrugated tube (inner diameter of the narrowest portion). And the insert pipe portion is inserted into the corrugated tube at least beyond one axial end or an axial outer end of the securing portion of the sleeve to be clamped, or at least within the securing portion of the sleeve to be clamped before the securing portion is compressively clamped, so that the corrugated tube is prevented from being deformed in crushing manner under clamping compression, even if the securing portion is clamped under considerable compression. The insert pipe portion usually composes a liquid or a fluid flow-through path or channel.

Sealing property between the end fitting and a composite hose is ensured by abutment of the end fitting to an end edge portion of a corrugated tube. Usually, the end fitting is pressed against the end edge portion of the corrugated tube until the end edge portion of the corrugated tube is slightly deformed under abutment force. However, in case that the end edge portion of the corrugated tube has not been finished up precisely, sufficient sealing property might not be ensured. Therefore, preferably, any sealing means is provided between the end fitting and the end edge portion of the corrugated tube.

Further, in order to achieve the aforementioned obj ect, there is provided a novel method for connecting an end fitting or a metallic end fitting to a composite hose having a metallic corrugated tube or a metallic spirally corrugated tube covered by a rubber or resin layer, or a surrounding layer, that is, a spirally corrugated tube enclosing hose.

The method comprises a step of preparing the composite hose or the spirally corrugated tube enclosing hose having the corrugated tube or the spirally corrugated tube covered by the surrounding layer along the entire length of the corrugated tube, and then, exposing an end portion of the corrugated tube out of the surrounding layer by way of stripping an end portion of the surrounding layer, a step of preparing a metallic sleeve having, as a unit or integrally, a connecting portion on one end side (axially outward side) for the end fitting to be fixedly screwed in, a thread portion in the middle to be screwed on an outer periphery of the end portion of the corrugated tube exposed out of or projecting from the surrounding layer, and a securing portion on the other end side (axially internal side) to cover a remaining end portion of the surrounding layer, and connecting the sleeve to the corrugated tube by way of screwing the thread portion of the sleeve on the outer periphery of the end portion of the corrugated tube exposed out of the surrounding layer so that the securing portion covers the remaining end portion of the surrounding layer, a step of preparing the end fitting having a screw-thread portion to be screwed in the connecting portion of the sleeve, and then, screwing the end fitting or the screw-thread portion to the connecting portion of the sleeve connected to the corrugated tube so as to abut an end edge portion of the corrugated tube exposed out of the surrounding layer, and a step of clamping fixedly the securing portion of the sleeve to the remaining end portion of the surrounding layer by compression after the end fitting is screwed in the connecting portion of the sleeve.

In the present invention, an end fitting is screwed in a sleeve until it abuts the end edge portion of the corrugated tube under the required pressure. And, a connecting strength allowing abutment engagement between the end fitting and the end edge portion of the corrugated tube is provided by screw-thread engagement of the sleeve with the exposed portion of the corrugated tube. In order to provide for the case that high pressure fluid or extremely high pressure fluid flows inside during operation of a fuel system or the like, and sufficient engagement is consequently not ensured between the end fitting and the end edge portion of the corrugated tube in abutment relation by way of screw-thread engagement between the sleeve and the corrugated tube, a securing portion is compressively clamped to increase connection strength of the sleeve to the composite hose.

In order to enhance mechanical strength of the corrugated tube against radial crushing stress thereon and to ensure connecting strength by compressively clamping the securing portion, the end fitting can be integrally provided with an insert pipe portion which is inserted into the corrugated tube when the end fitting is connected to the sleeve. It is preferred that the insert pipe portion is inserted at least beyond one axial end or an outer end of the securing portion of the sleeve, or at least within the portion of the surrounding layer on which the securing portion of the sleeve to be clamped, in order to prevent deforming a corrugated tube in crushing manner. Additionally, it is more effective for prevention of deforming a corrugated tube in crushing manner to form the insert pipe portion with an outer diameter substantially identical to an inner diameter of the corrugated tube. Usually, securing strength of a securing portion by compressively clamping on the corrugated tube exceeds that of a thread portion by screwing on the exposed portion of the corrugated tube. An insert pipe portion typically extends from the other axial end (axial inner end) of the screw-thread portion axially inwardly or in the other axial direction.

Structure and method for connecting an end fitting to a composite hose of the present invention enables to fixedly connect a sleeve to a composite hose. Therefore, if an end fitting is fixedly connected to the sleeve, sufficient sealing property can be ensured between the end fitting and the composite hose.

### Brief Description of the Drawings

Fig. 1 is an exploded perspective view showing an end fitting connecting structure of the present invention.
Fig. 2 is a schematic view showing a process to compose an end fitting connecting structure or an end fitting connecting method of the present invention, a sectional view showing configuration of a composite hose.
Fig. 3 is a schematic view showing a process to compose an end fitting connecting structure or an end fitting connecting method of the present invention, a sectional view showing exposing an end portion of a corrugated tube.
Fig. 4 is a schematic view showing a process to compose an end fitting connecting structure or an end fitting connecting method of the present invention, a sectional view showing connecting a sleeve to an end portion of a composite hose.
Fig. 5 is a schematic view showing a process to compose an end fitting connecting structure or an end fitting connecting method of the present invention, a sectional view showing a sleeve completedly screwed on the corrugated tube.
Fig. 6 is a schematic view showing a process to compose an end fitting connecting structure or an end fitting connecting method of the present invention, a sectional view showing connecting a nipple to a sleeve.
Fig. 7 is a schematic view showing a process to compose an end fitting connecting structure or an end fitting connecting method of the present invention, a sectional view showing a nipple screwed in a connecting portion of a sleeve.
Fig. 8 is a schematic view showing a process to compose an end fitting connecting structure or an end fitting connecting method of the present invention, a sectional view showing a securing portion of a sleeve pressed, and a nipple is completedly connected in a sleeve.

### DESCRIPTION OF THE PREFERRED EMBODIMENTS

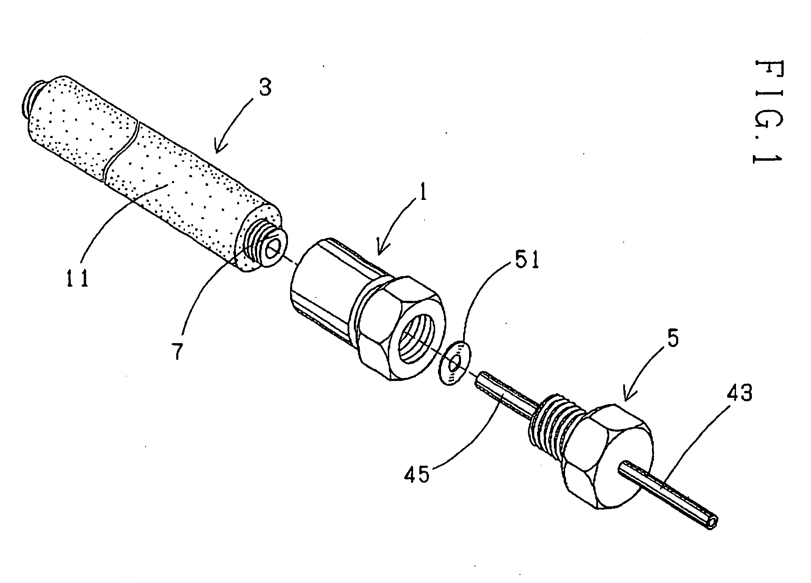

The embodiments of the present invention will be explained with reference to Figs. 1 to 8 hereinafter.

As shown in Fig. 1, a metallic sleeve 1 is connected on an end portion of a composite hose or a spirally corrugated tube enclosing hose 3, and a metallic nipple 5 (end fitting) to be connected, for example, to an automobile air conditioning system (not shown) is screwed in the sleeve 1, thereby structure for connecting the nipple 5 to the composite hose 3 is composed.

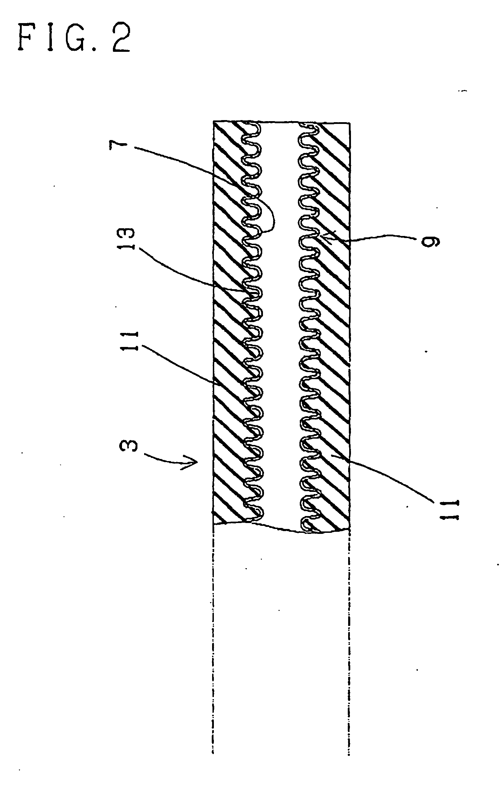

As shown in Fig. 2, the composite hose 3, to which the nipple 5 is connected, comprises an inner layer of a metallic corrugated tube or a metallic spirally corrugated tube 7 of which wall is thin and provided with spiral valleys and hills or external thread 9 along the entire length thereof, that is, between the both ends thereof, and an outer layer of a rubber surrounding layer 11 provided around the outer periphery of the corrugated tube 7 along the entire length thereof. The surrounding layer 11 made of rubber, is formed as to accommodate or fill in a groove or an annular groove 13 of the outer periphery of the corrugated tube 7 without leaving any space between an inner periphery surface of the surrounding layer 11 and the outer periphery of the corrugated tube 7. As for material for a corrugated tube 7, iron steels, alloy steels such as stainless steels, aluminum, aluminum alloys, copper, copper alloys, nickel or nickel alloys and the like are available. As for material for a rubber surrounding layer 11, isobutylene-isoprene rubber (IIR), ethylene-propylene-diene rubber (EPDM), chloroprene rubber (CR), epichlorohydrin rubber (ECO), halogenated butyl rubber or halogenated isobutylene-isoprene rubber and the like are available. The surrounding layer 11 may be comprised single layer or multiple sub-layers of different materials. Further, a reinforced layer such as fiber reinforced layer may be provided within the surrounding layer 11.

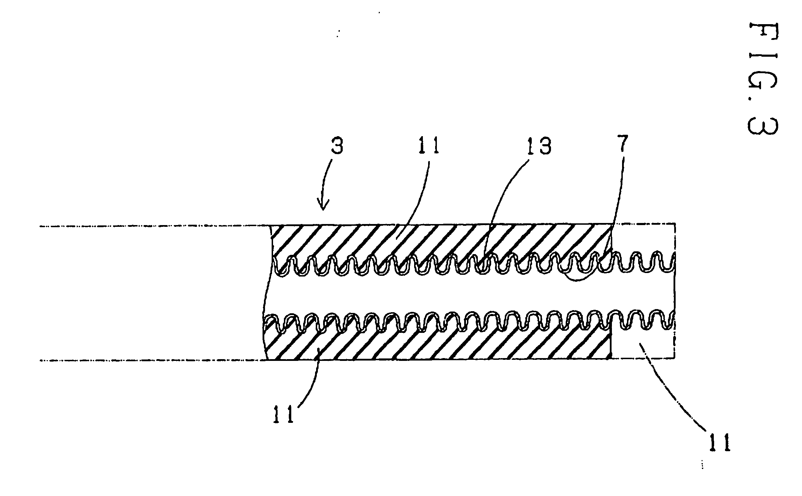

In thus configured composite hose 3, as shown in Fig. 3, an end portion of a surrounding layer 11 is cut away or stripped, so that an end portion of the inner layer, i.e. the corrugated tube 7 projects and is exposed out of the outer layer, i.e. the surrounding layer 11.

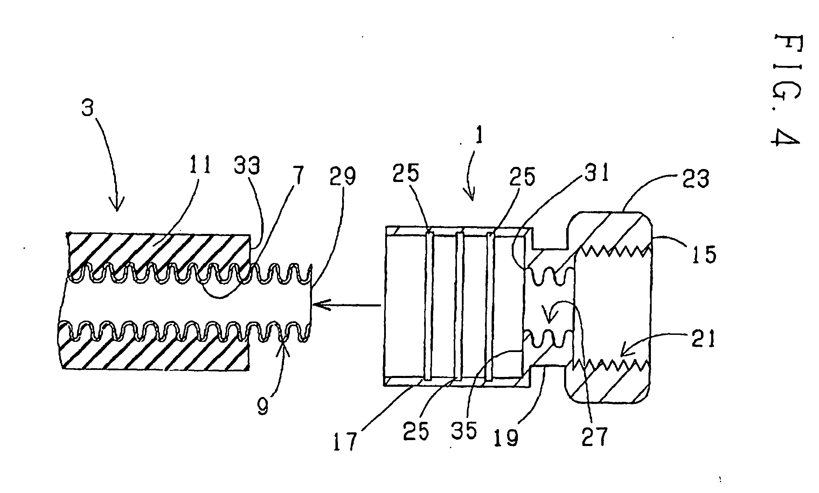

Then, as shown in Fig. 4, the sleeve 1 is mounted or connected to an end portion of the composite hose 3 out of which the corrugated tube 7 is exposed. The sleeve 1 integrally has a annular connecting portion 15 on one end side or a tip end side (axially outer end side), a cylindrical securing or fixture portion 17 on the other end side or a rear end side (axially inner end side), and a internal thread portion 19 between the connecting portion 15 and the securing portion 17. The connecting portion 15 is provided with an internal thread 21 in an inner peripheral surface, and an outer periphery surface 23 formed in hexagon for attachment with a wrench such as an electric wrench. The securing portion 17 is provided with three an annular engaging groove 25 in an inner periphery surface thereof, and has an inner diameter to be somewhat larger than an outer diameter of a remaining end portion of the surrounding layer 11. And, the internal thread portion 19 is provided with spiral valleys and hills or an internal thread 27 of a plurality of turns (typically of two turns) in the inner peripheral surface.

In order to connect the sleeve 1 to the composite hose 3, first, the sleeve 1 is fitted over the composite hose 3 from the other end opening or an rear end opening (axial inner end opening) of the securing portion 17 in surrounding relation to the end portion of the composite hose 3. Secondly, an end edge portion (outer edge portion) 29 of the corrugated tube 7 abuts a rim 31 of a rear aperture of the internal thread portion 19, and then the sleeve 1 is progressively turned, thereby internal thread 27 formed in an inner peripheral surface of the internal thread portion 19 engaging spiral valleys and hills 9 on an outer periphery of the corrugated tube 7. In this manner, the internal thread portion 19 is fixedly screwed on the corrugated tube 7. The internal thread 27 of the internal thread portion 19 engages spiral valleys and hills 9 of the corrugated tube 7 generally in two turns, thereby engagement or connection strength between the sleeve 1 and the corrugated tube 7 is not little. The sleeve 1 is progressively turned until an end surface 33 of the surrounding layer 11 abuts the other end surface or a rear end surface (axially inner end surface) 35 of the internal thread portion 19.

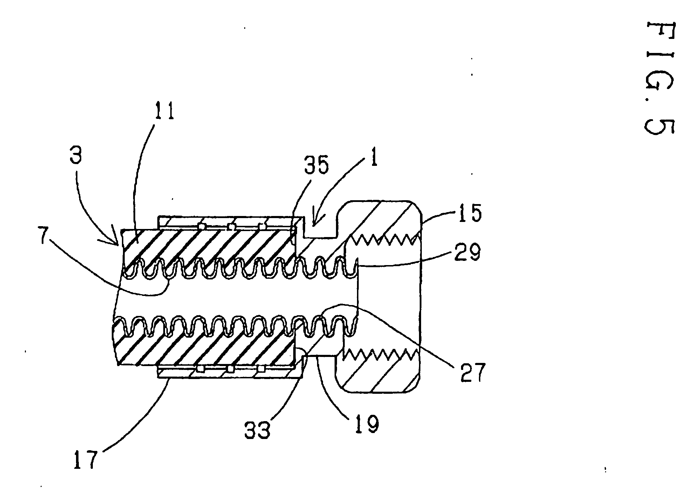

An axial length of an exposed portion of the corrugated tube 7 is designated so that an end (outer end) of the corrugated tube 7 somewhat projects in a connecting portion 15 beyond the internal thread portion 19 when the sleeve 1 or internal thread portion 19 of the sleeve 1 is completely screwed on the corrugated tube 7 (refer to Fig.5).

Then the nipple 5 is connected to the connecting portion 15 for connection to the sleeve 1. The nipple 5 integrally has a head portion 37 with outer periphery surface 39 in hexagon shape to fit in a wrench such as an electric wrench on front end side (axial outer end side), and a thread shaft portion 41 (screw-thread portion) extending rearward from a rear end surface of the head portion 37 with an outer periphery threaded. A connecting pipe portion 43 extends from center on one end surface or front end surface (axially outer end surface) of the head portion 37, adapted to connect, for example, to an automobile air conditioning system, and an insert pipe portion 45 extends rearward or in direction for screwing it in from a center of a rear end surface (axially inner end surface) 47 having an outer diameter substantially three times that of the insert pipe portion 45 of a thread shaft portion 41. The head portion 37 and the thread shaft portion 41 is provided with an axial slot 49 therein to communicate between the connecting pipe portion 43 and the insert pipe portion 45. That is, the nipple 5 is provided with a communication slot or channel from the connecting pipe portion 43 through the insert pipe portion 45. In this embodiment, the outer dimension (outer diameter) of the insert pipe portion 45 is 7mm, substantially identical to the inner dimension (inner diameter) of the corrugated tube 7, which is 7.1mm.

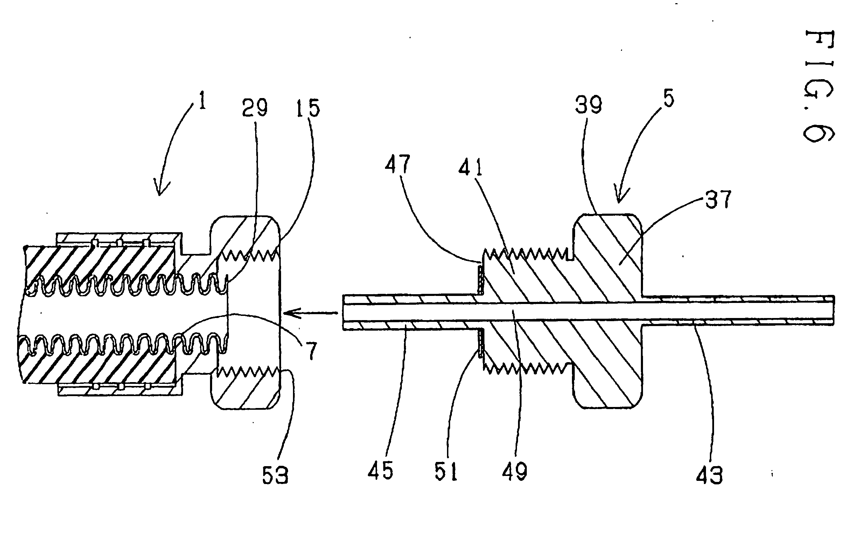

For connecting the nipple 5 to the sleeve 1, a metallic or rubber and the like annular sealing member 51 is first fit on the insert pipe portion 45 so as to contact with a rear end surface 47 of the thread shaft portion 41, and then, the insert pipe portion 45 is inserted into the corrugated tube 7 until the outer peripheral edge portion of the rear end surface 47 of the thread shaft portion 41 contacts a rim 53 of a front end opening of the connecting portion 15 (refer to an arrow in Fig. 6).

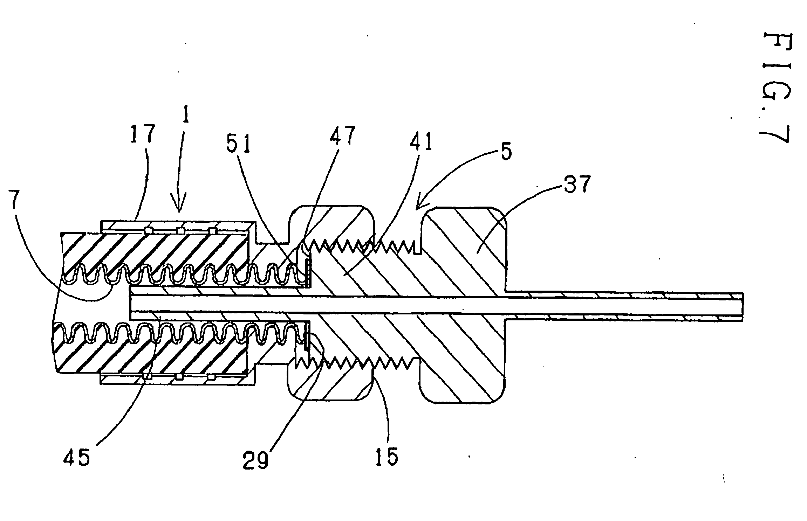

When the outer peripheral edge portion of the rear end surface 47 of the thread shaft portion 41 contacts the rim 53 of the front end opening of the connecting portion 15 of the sleeve 1, the nipple 5 is progressively turned, and thereby the thread shaft portion 41 is screwed into the connecting portion 15 of the sleeve 1 so that the rear end surface 47 of the thread shaft portion 41 contacts with the end edge portion 29 of the corrugated tube 7 by means of the sealing member 51 with proper pressure or abutment force (refer to Fig. 7). At this stage, the end edge portion 29 of the corrugated tube 7 is pressed and somewhat compressed or deformed by the thread shaft portion 41. The other end or the rear end of the insert pipe portion 45 extends rearwardly (axially inwardly) from center axially of the securing portion 17 of the sleeve 1 (specifically, nearly to the rear end of the securing portion 17). The insert pipe portion 45 can be also configured to extend just short of the axial center of the securing portion 17 of the sleeve 1.

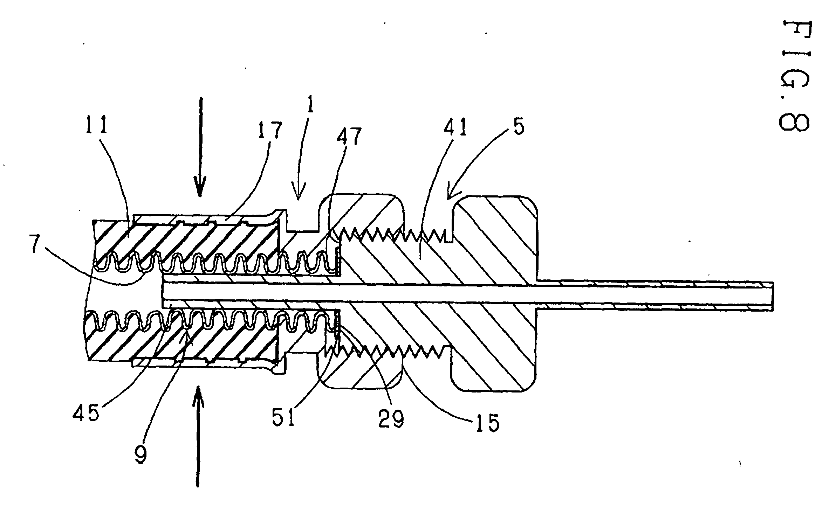

As shown in Fig. 8, after the nipple 5 is screwed in the sleeve 1, the securing portion 17 is pressed or compressed, and thereby the securing portion 17 is radially depressed and securely clamped on the end portion or an outer periphery of the end portion of the surrounding layer 11 (Refer to arrows in Fig. 8). As the outer diameter of the insert pipe portion 45 of the nipple 5 is generally identical to the inner diameter of the corrugated tube 7, the corrugated tube 7 is not deformed in crushing manner with compressive force when the securing portion 17 is pressed and clamped. Thus, it prevents a problem that sufficient securing strength is not ensured between the securing portion 17 and the surrounding layer 11. The securing portion 17 covers around the surrounding layer 11 over a plurality of turns of spiral valleys and hills 9 of the corrugated tube 7 (specifically, about seven turns), and clamped portion of the securing portion 17 extends over plurality of turns of the spiral valleys and hills 9 (specifically, about six turns). As a result, the sleeve 1 is connected to the composite hose 3 with considerable connecting force by the pressed and clamped securing portion 17.

## Claims

1. A structure for connecting an end fitting (5) to a composite hose (3) having a metallic corrugated tube (7) covered by a surrounding layer (11) made of rubber or resin, comprising:
the composite hose (3) having the corrugated tube (7) exposed out of the surrounding layer (11) at an end portion of the corrugated tube (7),
a metallic sleeve (1) connected to an end portion of the composite hose (3), and
the end fitting (5) attached to the sleeve (1),
wherein the sleeve (1) has, as a unit or integrally, a connecting portion (15) on one end side in which the end fitting (5) is fixedly screwed, a thread portion (19) in the middle which is screwed on an outer periphery of the corrugated tube (7) exposed out of the surrounding layer (11) such that an end surface (33) of the surrounding layer (11) abuts the other end surface (35) of the thread portion (19), and a securing portion (17) on the other end side which covers an end portion of the surrounding layer (11) and is fixedly clamped on the end portion of the surrounding layer (11) by compression,
wherein the end fitting (5) is provided integrally with an insert pipe portion (45) inserted into the corrugated tube (7) and extending at least within the portion of the surrounding layer (11) on which the securing portion (17) of the sleeve (1) is to be fixedly clamped, and is screwed in the connecting portion (15) of the sleeve (1) so as to abut an end edge portion (29) of the corrugated tube (7) exposed out of the surrounding layer (11) and projecting beyond the thread portion (19),
wherein the insert pipe portion (45) is former with an outer diameter substantially identical to an inner diameter of the corrugated tube (7),
wherein the surrounding layer (11) fills in an outer periphery of the corrugated tube (7) so as to follow an outer shape of the corrugated tube (7), at least, in a range from the end surface (33) to the other end of the insert pipe portion (45),
wherein the thread portion (19) is fixedly screwed on the corrugated tube (7) such that spiral valleys and hills (27) formed in an inner peripheral surface of the thread portion (19) engage with an outer periphery of the corrugated tube (7) exposed out of the surrounding layer (11) over generally entire length thereof.

2. A structure according to claim 1, wherein the surrounding layer (11) is formed so as to fill in an outer periphery of the corrugated tube (7) without leaving any space at least, in a range from the end surface (33) to the other end of the insert pipe portion (45).

3. A structure according to claim 1 or 2, wherein the insert pipe portion (45) is configured to extend nearly to the other end of the securing portion (17).

4. A structure according to any one of claims 1 to claim 3, wherein the end fitting (5) abuts the end edge portion (29) of the corrugated tube (7) by means of metallic sealing means (51).

5. A method for connecting an end fitting (5) to a composite hose (3) having a metallic corrugated tube (7) covered by a surrounding layer (11) made of rubber or resin, comprising:
preparing the composite hose (3) having the corrugated tube (7) covered by the surrounding layer (11) along the entire length of the corrugated tube (7), and then, exposing an end portion of the corrugated tube (7) out of the surrounding layer (11) by way of stripping an end portion of the surrounding layer (11),
preparing metallic sleeve (1) having, as a unit or integrally, a connecting portion (15) on one end side for the end fitting (5) to be fixedly screwed in, a thread portion (19) in the middle to be screwed on an outer periphery of the end portion of the corrugated tube (7) exposed out of the surrounding layer (11), and a securing portion (17) on the other end side to cover a remaining end portion of the surrounding layer (11), and connecting the sleeve (1) to the corrugated tube (7) by way of screwing the thread portion (19) of the sleeve (1) on the outer periphery of the end portion of the corrugated tube (7) exposed out of the surrounding layer (11) so that an send surface (33) of the surrounding layer (11) abuts the other end surface (35) or the thread portion (19) and the securing portion (17) covers the remaining end portion of the surrounding layer (11),
preparing the end fitting (5) having a screw-thread portion (41) to be screwed in the connecting portion (15) of the sleeve (1) and provided integrally with an insert pipe portion (45) extending in a direction for screwing it, and then, screwing the end fitting (5) to the connecting portion (15) of the sleeve (1) connected to the corrugated tube (7) so as to abut an end edge portion (29) of the corrugated tube (7) exposed out of the surrounding layer (11) and projecting beyond the thread portion (19),
clamping fixedly the securing portion (17) of the sleeve (1) to the remaining end portion of the surrounding layer (11) by compression after the end flitting (5) screwed in the connecting portion (15) of the sleeve (1),
wherein the insert pipe portion (45) is formed with an outer diameter substantially identical to an inner diameter of the corrugated tube (7), and is inserted into the corrugated tube (7) so as to extend at least within the portion of the surrounding layer (11) on which the securing portion (17) of the sleeve (1) is to be fixedly clamped,
wherein the surrounding layer (11) is fills in an outer periphery of the corrugated tube (7) so as to follow an outer shape of the corrugated tube (7), at least, in range from the end surface (33) to the other end of the insert pipe portion (45), and
wherein the thread portion (19) is fixedly screwed on the corrugated tube (7) such that spiral valleys and hills (27) formed in an inner peripheral surface of the thread portion (19) engage with an outer periphery of the corrugated tube (7) exposed out of the surrounding layer (11) over generally entire length thereof, in a step of connecting the sleeve (1) to the corrugated tube (7).

## Patentansprüche

1. Struktur zum Verbinden eines Anschlußstücks (5) mit einem Verbundschlauch (3), der ein Metallwellrohr (7) hat, das mit einer aus Gummi oder Harz hergestellten Mantelschicht (11) bedeckt ist, mit:
dem Verbundschlauch (3) mit dem Wellrohr (7), das aus der Mantelschicht (11) an einem Endabschnitt des Wellrohrs (7) freiliegt,
einer Metallhülse (1), die mit einem Endabschnitt des Verbundschlauchs (3) verbunden ist, und
dem Anschlußstück (5), das an der Hülse (1) angebracht ist,
wobei die Hülse (1) als Einheit oder einstückig folgendes hat: einen Verbindungsabschnitt (15) auf einer Endseite, in den das Anschlußstück (5) fest eingeschraubt ist, einen Gewindeabschnitt (19) in der Mitte, der auf einen Außenumfang des aus der Mantelschicht (11) freiliegenden Wellrohrs (7) so aufgeschraubt ist, daß eine Endfläche (33) der Mantelschicht (11) an der anderen Endfläche (35) des Gewindeabschnitts (19) anliegt, und einen Befestigungsabschnitt (17) auf der anderen Endseite, der einen Endabschnitt der Mantelschicht (11) bedeckt und auf den Endabschnitt der Mantelschicht (11) durch Aufpressen fest verspannt ist,
wobei das Anschlußstück (5) mit einem Einsatzrohrleitungsabschnitt (45) einstückig versehen ist, der in das Wellrohr (7) eingesetzt ist und sich mindestens in dem Abschnitt der Mantelschicht (11) erstreckt, auf dem der Befestigungsabschnitt (17) der Hülse (1) fest zu verspannen ist, und in den Verbindungsabschnitt (15) der Hülse (1) so eingeschraubt ist, daß es an einem Endkantenabschnitt (29) des Wellrohrs (7) anliegt, der aus der Mantelschicht (11) freiliegt und über den Gewindeabschnitt (19) hinaus vorsteht,
wobei der Einsatzrohrleitungsabschnitt (45) mit einem Außendurchmesser gebildet ist, der im wesentlichen mit einem Innendurchmesser des Wellrohrs (7) identisch ist,
wobei die Mantelschicht (11) einen Außenumfang des Wellrohrs (7) so ausfüllt, daß sie einer Außenform des Wellrohrs (7) mindestens in einem Bereich von der Endfläche (33) zum anderen Ende des Einsatzrohrleitungsabschnitts (45) folgt,
wobei der Gewindeabschnitt (19) auf das Wellrohr (7) so fest aufgeschraubt ist, daß spiralförmige Täler und Berge (27), die in einer Innenumfangsfläche des Gewindeabschnitts (19) gebildet sind, einen Eingriff mit einem Außenumfang des aus der Mantelschicht (11) freiliegenden Wellrohrs (7) allgemein über dessen gesamte Länge herstellen.

2. Struktur nach Anspruch 1, wobei die Mantelschicht (11) so gebildet ist, daß sie einen Außenumfang des Wellrohrs (7) mindestens in einem Bereich von der Endfläche (33) zum anderen Ende des Einsatzrohrleitungsabschnitts (45) ausfüllt, ohne Raum zu belassen.

3. Struktur nach Anspruch 1 oder 2, wobei der Einsatzrohrleitungsabschnitt (45) so konfiguriert ist, daß er sich nahezu zum anderen Ende des Befestigungsabschnitts (17) erstreckt.

4. Struktur nach einem der Ansprüche 1 bis 3, wobei das Anschlußstück (5) am Endkantenabschnitt (29) des Wellrohrs (7) mittels einer Metalldichtungseinrichtung (51) anliegt.

5. Verfahren zum Verbinden eines Anschlußstücks (5) mit einem Verbundschlauch (3), der ein Metallwellrohr (7) hat, das mit einer aus Gummi oder Harz hergestellten Mantelschicht (11) bedeckt ist, mit den folgenden Schritten:
Vorbereiten des Verbundschlauchs (3) mit dem Wellrohr (7), das von der Mantelschicht (11) über die gesamte Länge des Wellrohrs (7) bedeckt ist, und anschließendes Freilegen eines Endabschnitts des Wellrohrs (7) aus der Mantelschicht (11) mittels Ablösen eines Endabschnitts der Mantelschicht (11),
Vorbereiten einer Metallhülse (1), die als Einheit oder einstückig folgendes hat: einen Verbindungsabschnitt (15) auf einer Endseite zum festen Einschrauben des Anschlußstücks (5), einen Gewindeabschnitt (19) in der Mitte zum Aufschrauben auf einen Außenumfang des Endabschnitts des Wellrohrs (7), der aus der Mantelschicht (11) freiliegt, und einen Befestigungsabschnitt (17) auf der anderen Endseite zum Abdecken eines restlichen Endabschnitts der Mantelschicht (11), und Verbinden der Hülse (1) mit dem Wellrohr (7) mittels Aufschrauben des Gewindeabschnitts (19) der Hülse (1) auf den Außenumfang des Endabschnitts des Wellrohrs (7), der aus der Mantelschicht (11) freiliegt, so daß eine Endfläche (33) der Mantelschicht (11) an der anderen Endfläche (35) des Gewindeabschnitts (19) anliegt und der Befestigungsabschnitt (17) den restlichen Endabschnitt der Mantelschicht (11) bedeckt,
Vorbereiten des Anschlußstücks (5), das einen Schraubgewindeabschnitt (41) zum Einschrauben in den Verbindungsabschnitt (15) der Hülse (1) hat und mit einem Einsatzrohrleitungsabschnitt (45) einstückig versehen ist, der sich in dessen Einschraubrichtung erstreckt, und anschließendes Einschrauben des Anschlußstücks (5) in den mit dem Wellrohr (7) verbundenen Verbindungsabschnitt (15) der Hülse (1), um an einem Endkantenabschnitt (29) des Wellrohrs (7) anzuliegen, der aus der Mantelschicht (11) freiliegt und über den Gewindeabschnitt (19) hinaus vorsteht,
festes Verspannen des Befestigungsabschnitts (17) der Hülse (1) am restlichen Endabschnitt der Mantelschicht (11) durch Aufpressen, nachdem das Anschlußstück (5) in den Verbindungsabschnitt (15) der Hülse (1) eingeschraubt ist,
wobei der Einsatzrohrleitungsabschnitt (45) mit einem Außendurchmesser gebildet ist, der im wesentlichen mit einem Innendurchmesser des Wellrohrs (7) identisch ist, und in das Wellrohr (7) so eingesetzt wird, daß er sich mindestens in dem Abschnitt der Mantelschicht (11) erstreckt, auf dem der Befestigungsabschnitt (17) der Hülse (1) fest zu verspannen ist,
wobei die Mantelschicht (11) einen Außenumfang des Wellrohrs (7) so ausfüllt, daß sie einer Außenform des Wellrohrs (7) mindestens in einem Bereich von der Endfläche (33) zum anderen Ende des Einsatzrohrleitungsabschnitts (45) folgt, und
wobei der Gewindeabschnitt (19) auf das Wellrohr (7) so fest aufgeschraubt wird, daß spiralförmige Täler und Berge (27), die in einer Innenumfangsfläche des Gewindeabschnitts (19) gebildet sind, einen Eingriff mit einem Außenumfang des aus der Mantelschicht (11) freiliegenden Wellrohrs (7) allgemein über dessen gesamte Länge in einem Schritt des Verbindens der Hülse (1) mit dem Wellrohr (7) herstellen.

## Revendications

1. Structure permettant de relier un raccord d'extrémité (5) à un flexible composite (3) comprenant un tube métallique ondulé (7) recouvert d'une couche de revêtement (11) constituée de caoutchouc ou de résine, comprenant :
le flexible composite (3) avec le tube ondulé (7) exposé à l'extérieur de la couche de revêtement (11) au niveau d'une portion d'extrémité du tube ondulé (7),
un manchon métallique (1) relié à une portion d'extrémité du flexible composite (3), et
le raccord d'extrémité (5) fixé au manchon (1),
dans laquelle le manchon (1) comprend, en tant qu'élément séparé ou d'une seule pièce, une portion de raccordement (15) à une extrémité dans laquelle le raccord d'extrémité (5) est vissé solidement, une portion filetée (19) au centre qui est vissée sur une périphérie externe du tube ondulé (7) exposé à l'extérieur de la couche de revêtement (11) de façon à ce qu'une surface d'extrémité (33) de la couche de revêtement (11) soit en butée contre l'autre surface d'extrémité (35) de la portion filetée (19), et une portion de fixation (17) à l'autre extrémité, qui recouvre une portion d'extrémité de la couche de revêtement (11) et qui est fortement serrée sur la portion d'extrémité de la couche de revêtement (11) par compression,
dans laquelle le raccord d'extrémité (5) est muni, d'une seule pièce, d'une portion d'insert de conduite (45) insérée dans le tube ondulé (7) et s'étendant au moins dans la portion de la couche de revêtement (11) sur laquelle la portion de fixation (17) du manchon (1) doit être fortement serrée, et est vissé dans la portion de raccordement (15) du manchon (1) de manière à être en butée contre une portion d'arête d'extrémité (29) du tube ondulé (7) exposé à l'extérieur de la couche de revêtement (11) et dépassant de la portion filetée (19),
dans laquelle la portion d'insert de conduite (45) présente un diamètre externe sensiblement identique à un diamètre interne du tube ondulé (7),
dans laquelle la couche de revêtement (11) remplit une périphérie externe du tube ondulé (7) de façon à suivre une forme externe du tube ondulé (7), au moins sur une distance entre la surface d'extrémité (33) et l'autre extrémité de la portion d'insert de conduite (45),
dans laquelle la portion filetée (19) est solidement vissée sur le tube ondulé (7) de façon à ce que les creux et les crêtes de la spirale (27) formés sur une surface périphérique interne de la portion filetée (19) s'emboîtent avec une périphérie externe du tube ondulé (7) exposée à l'extérieur de la couche de revêtement (11) sur toute sa longueur.

2. Structure selon la revendication 1, dans laquelle la couche de revêtement (11) est conçue de façon à remplir une périphérie externe du tube ondulé (7) sans laisser aucun espace au moins sur une distance entre la surface d'extrémité (33) et l'autre extrémité de la portion d'insert de conduite (45).

3. Structure selon la revendication 1 ou 2, dans laquelle la portion d'insert de conduite (45) est conçue pour s'étendre à proximité de l'autre extrémité de la portion de fixation (17).

4. Structure selon l'une des revendications 1 à 3, dans laquelle le raccord d'extrémité (5) est en butée contre la portion d'arête d'extrémité (29) du tube ondulé (7) à l'aide de moyens d'étanchéité métalliques (51).

5. Procédé de raccordement d'un raccord d'extrémité (5) à un flexible composite (3) comprenant un tube ondulé métallique (7) recouvert d'une couche de revêtement (11) constituée de caoutchouc ou de résine, comprenant les étapes suivantes :
préparation du flexible composite (3) comprenant le tube ondulé (7) recouvert de la couche de revêtement (11) sur toute la longueur du tube ondulé (7) puis exposition d'une portion d'extrémité du tube ondulé (7) à l'extérieur de la couche de revêtement (11) en retirant une portion d'extrémité de la couche de revêtement (11).
préparation d'un manchon métallique (1) comprenant, en tant qu'élément séparé ou d'une seule pièce, une portion de raccordement (15) à une extrémité afin de visser solidement le raccord d'extrémité (5), une portion filetée (19) au centre, destinée à être vissée sur une périphérie externe de la portion d'extrémité du tube ondulé (7) exposée à l'extérieur de la couche de revêtement (11), et une portion de fixation (17) à l'autre extrémité pour recouvrir une portion d'extrémité restante de la couche de revêtement (11), et raccordement du manchon (1) au tube ondulé (7) en vissant la portion filetée (19) du manchon (1) sur la périphérie externe de la portion d'extrémité du tube ondulé (7) exposée à l'extérieur de la couche de revêtement (11) de façon à ce qu'une surface d'extrémité (33) de la couche de revêtement (11) soit en butée contre l'autre surface d'extrémité (35) de la portion filetée (19) et à ce que la portion de fixation (17) recouvre la portion d'extrémité restante de la couche de revêtement (11),
préparation du raccord d'extrémité (5) comprenant une portion filetée (41) destinée à être vissée dans la portion de raccordement (15) du manchon (1) et formée d'une seule pièce avec une portion d'insert de conduite (45) s'étendant dans une direction afin de la visser, puis vissage du raccord d'extrémité (5) sur la portion de raccordement (15) du manchon (1) reliée au tube ondulé (7) afin qu'elle soit en butée contre une portion d'arête d'extrémité (29) du tube ondulé (7) exposé à l'extérieur de la couche de revêtement (11) et dépassant de la portion filetée (19),
serrage important de la portion de fixation (17) du manchon (1) sur la portion d'extrémité restante de la couche de revêtement (11) par compression après le vissage du raccord d'extrémité (5) dans la portion de raccordement (15) du manchon (1),
dans laquelle la portion d'insert de conduite (45) présente un diamètre externe sensiblement identique à un diamètre interne du tube ondulé (7) et est insérée dans le tube ondulé (7) de façon à s'étendre au moins dans la portion de la couche de revêtement (11) sur laquelle la portion de fixation (17) du manchon (1) doit être fortement serrée,
dans laquelle la couche de revêtement (11) remplit une périphérie externe du tube ondulé (7) de façon à suivre une forme externe du tube ondulé (7), au moins sur une distance entre la surface d'extrémité (33) et l'autre extrémité de la portion d'insert de conduite (45) et
dans laquelle la portion filetée (19) est vissée solidement sur le tube ondulé (7) de façon à ce que les creux et les crêtes de la spirale (27), formés sur une surface périphérique interne de la portion filetée (19), s'emboîtent avec une périphérie externe du tube ondulé (7) exposé à l'extérieur de la couche de revêtement (11) sur toute la longueur de celui-ci, dans une étape de raccordement du manchon (1) au tube ondulé (7).
